# EUROPÄISCHE PATENTANMELDUNG

(11) **EP 2 108 431 A1**
(43) Veröffentlichungstag der Anmeldung: **14.10.2009**
(21) Anmeldenummer: 09002911.7
(22) Anmeldetag: 28.02.2009
(51) Int. Cl.: B01D 46/02, B01D 46/48, B01D 46/00

(54) **Schlauchfilter und Verfahren zur Herstellung desselben**

(30) Priorität: 03.04.2008 DE 102008017416
(71) Anmelder: Schuko H. Schulte-Südhoff GmbH, 49196 Bad Laer (DE)
(72) Erfinder: Schulte-Südhoff, Heinz, 49196 Bad Laer (DE); Schulte-Südhoff, Heiko, 49124 Rothenfelde (DE)
(74) Vertreter: Möller, Friedrich

(57) **Zusammenfassung**

Schlauchfilter (11) weisen einen Filterschlauch (18) auf, der an mindestens einem Ende (21) mit einem Endstück (19) versehen ist. Bisher wird das Endstück (19) an das Ende (21) des Filterschlauchs (18) durch Nähen befestigt. Das erfordert einen separaten und aufwendigen Arbeitsschritt bei der Herstellung des Schlauchfilters (11).

Die Erfindung sieht es vor, mindestens ein Ende (21) des Filterschlauchs (18) an das Endstück (19) beim Herstellen desselben anzuformen, insbesondere anzuspritzen. Es entsteht so eine dauerhafte einstückige schweißnahtähnliche Einheit aus dem Filterschlauch (18) und dem mindestens einen Endstück (19) in einem einzigen Arbeitsschritt beim Herstellen des Endstücks (19). Das zusätzliche Vernähen des Endstücks (19) mit dem Filterschlauch (18) entfällt dadurch.

## Beschreibung

Die Erfindung betrifft ein Schlauchfilter gemäß dem Oberbegriff des Anspruchs 1 und ein Verfahren zur Herstellung eines Schlauchfilters gemäß dem Oberbegriff des Anspruchs 9.

Schlauchfilter der hier angesprochenen Art werden verwendet für Geräte zur physikalischen Stofftrennung. Beispielsweise dienen die Schlauchfilter dazu, Feststoffe aus einem Luft-Feststoffgemisch, insbesondere Staub, abzuscheiden. Solche Schlauchfilter werden vielfach bei Filter- bzw. Absaugeinrichtungen in holz- und papierverarbeitenden Betrieben zum Abscheiden von Spänen oder Papierpartikeln eingesetzt.

Die Schlauchfilter verfügen über sogenannte Filterschläuche, die an mindestens einem Ende mit einem Endstück versehen sind. Beim Endstück handelt es sich beispielsweise um einen ringartigen Kragen, womit der Filterschlauch in ein zum Filtern dienendes Gerät einhängbar ist. Vom Kragen wird das mit ihm versehene Ende des Filterschlauchs auch zum Entweichen gefilterter Luft offengehalten. Gegebenenfalls kann das dem Kragen gegenüberliegende Ende des Filterschlauchs auch mit einem Endstück versehen sein, das dazu dient, das zweite, vorzugsweise untere, Ende des Filterschlauchs zu verschließen. Ein solches Endstück ist dann als Kappe ausgebildet.

Bei bekannten Schlauchfiltern werden die Endstücke mit den Filterschläuchen durch Nähen verbunden. Abgesehen davon, dass das Nähen des Filterschlauchs mit den aus Kunststoff gebildeten Endstücken recht schwierig ist, erfordert das Vernähen der Filterschläuche mit den Endstücken einen zusätzlichen Arbeitsgang.

Der Erfindung liegt die Aufgabe zugrunde, einen preiswert herzustellenden Schlauchfilter und ein entsprechendes Verfahren zur Herstellung desselben zu schaffen.

Ein Schlauchfilter zur Lösung dieser Aufgabe weist die Merkmale des Anspruchs 1 auf. Dadurch, dass das jeweilige Endstück an das ihm zugeordnete Ende des Filterschlauchs angeformt ist, erübrigt sich das nachträgliche Annähen des Endstücks an den Filterschlauch.

Das jeweilige Endstück ist vorzugsweise so am Filterschlauch angeformt, dass das Endstück mit dem Filterschlauch einstückig verbunden ist. Dadurch kommt eine sehr zuverlässige, dauerhafte und auch luftundurchlässige Verbindung zustande.

Bei einer bevorzugten Ausgestaltung der Erfindung ist ein Ende des Endstücks mit dem ihm zugeordneten Ende des Filterschlauchs stumpf verbunden. Der beim Annähen des Filterschlauchs an das Endstück erforderliche Überlappungsbereich zwischen beiden kann so entfallen. Dementsprechend kann vor allem das Endstück kürzer ausgebildet sein und es geht auch am mit dem Endstück verbundenen Endbereich des Filterschlauchs keine wirksame Filterfläche verloren.

Alternativ ist es aber auch denkbar, einen Endbereich des Filterschlauchs an einen Endbereich des Endstücks anzuformen. Diese dann überlappende Verbindung eignet sich besonders für sehr dünnwandige Endstücke und Filterschläuche, wodurch bei einer stumpfen Verbindung nur eine sehr geringe Verbindungsfläche zur Verfügung stehen würde. Außerdem ermöglicht das überlappte Anformen des Filterschlauchs an ein Endstück unterschiedliche Wandstärken des Endstücks und des Filterschlauchs. Infolge der Überlappung zwischen einem Endbereich des Filterschlauchs und des Endstücks kommt eine verhältnismäßig große Verbindungsfläche zustande, womit eine hochbelastbare Anformung des Filterschlauchs an das Endstück möglich ist.

Gemäß einer vorteilhaften Ausgestaltung der Erfindung ist vorgesehen, dass der Endbereich des Filterschlauchs den Endbereich des Endstücks innen bereichsweise überlappt. Dadurch bleibt die Außenseite des Endstücks frei, wodurch die Einhängung des Filterschlauchs mit dem Endstück in eine Halterung der Filtereinrichtung erleichtert wird. Des Weiteren ist es vorgesehen, dass die Materialstärke des Filterschlauchs maximal der Wandstärke des Endstücks entspricht. Vorzugsweise ist die Materialstärke des Filterschlauchs etwas dünner als die Materialstärke des Endstücks. Das ist besonders dann der Fall, wenn der Filterschlauch an das Endstück mit Überlappung angeformt wird. Falls eine stumpfe Verbindung des Filterschlauchs mit dem Endstück erfolgt, ist bevorzugt die Wandstärke des Filterschlauchs gleich oder zumindest annähernd gleich mit der Wandstärke des Endstücks. Dadurch wird eine möglichst große Fläche zum stumpfen Anformen des Filterschlauchs an das Endstück geschaffen.

Eine bevorzugte Ausgestaltung der Erfindung sieht es vor, dass das jeweilige Endstück an den Filterschlauch angespritzt ist. Beim Anspritzen des Endstücks an den Filterschlauch kommt eine einstückige schweißnahtähnliche Verbindung zwischen dem Endstück und dem Filterschlauch zustande, die über eine sehr große Festigkeit verfügt. Bevorzugt wird das jeweilige Endstück an den Filterschlauch bei seiner Herstellung angeformt. Dadurch wird in einem Arbeitsgang das jeweilige Endstück und die Verbindung desselben zum ihm zugewandten Ende oder Endbereich des Filterschlauchs hergestellt. Ein zusätzlicher Arbeitsgang für die Verbindung des Endstücks mit dem Filterschlauch - wie das bisher üblich war - entfällt auf diese Weise.

Der Filterschlauch ist aus einem kunststoffhaltigen Vlies oder Gewebe gebildet, vorzugsweise aus einem vollständig aus Kunststoff bestehenden Vlies oder Gewebe. Beim Kunststoff kann es sich beispielsweise um Polyester oder ein Polyethylen handeln. Der aus einem solchen Material hergestellte oder bestehende Filterschlauch kann eine besonders feste Verbindung mit dem angeformten Endstück eingehen, wobei das Endstück aus beliebigen Kunststoffen gebildet sein kann, also nicht unbedingt aus dem gleichen Kunststoff, aus dem der Filterschlauch besteht oder der im Filterschlauch enthalten ist. Denkbar ist es auch, dass der Filterschlauch aus Fasern oder Strängen verschiedener Kunststoffe gebildet ist. Die mindestens teilweise Bildung auch des Filterschlauchs aus Kunststoff ermöglicht vor allem ein wirksames Verbinden mit dem Endstück, wenn dieses an den Filterschlauch angespritzt wird.

Ein Verfahren zur Lösung der eingangs genannten Aufgabe weist die Maßnahmen des Anspruchs 9 auf. Gemäß diesem Verfahren ist vorgesehen, dass der jeweilige Filterschlauch beim Spritzen des Endstücks aus Kunststoff an das Endstück angeformt wird. Die Verbindung des Filterschlauchs mit dem mindestens einen Endstück geschieht somit ohne einen zusätzlichen Arbeitsgang beim Spritzen des jeweiligen Endstücks. Vorzugsweise findet dabei ein Anspritzen des dem Endstück zugeordneten Endes des Filterschlauchs bei der Herstellung des Endstücks statt.

Bevorzugt sieht das erfindungsgemäße Verfahren es vor, das jeweilige Endstück bei der Herstellung an das ihm zugeordnete Ende des Filterschlauchs stumpf oder mit Überlappung anzuformen. Insbesondere wird beim Spritzen des Endstücks das ihm zugeordnete Ende des Filterschlauchs an das Endstück in einem Arbeitsgang angespritzt. Die dabei entstehende stumpfe oder eine Überlappung aufweisende Verbindung des Endstücks mit dem Ende oder dem Endbereich des Filterschlauchs führt zu einer schweißnahtähnlichen, dauerhaften Verbindung zwischen dem Endstück und dem Filterschlauch, insbesondere eine Stumpfnaht oder gegebenenfalls auch eine Überlappungsnaht.

Gemäß einer bevorzugten Ausbildung des Verfahrens ist es vorgesehen, das Endstück aus einem Kunststoff zu spritzen, der mit dem Material des Filterschlauchs beim Anspritzen des Endstücks an den Filterschlauch eine einstückige Verbindung eingeht. Zu diesem Zweck ist bevorzugt der Filterschlauch auch ganz oder zumindest teilweise aus wenigstens einem Kunststoff gebildet. Beim Kunststoff des Endstücks und des Filterschlauchs handelt es sich bevorzugt jeweils um einen thermoplastischen Kunststoff. Es können aber unterschiedliche thermoplastische Kunststoffe für den Filterschlauch und das Endstück verwendet werden. Während üblicherweise der Filterschlauch mindestens teilweise aus einem Polyester oder einem Polyethylen gebildet ist, kann das Endstück auch aus einem anderen thermoplastischen Kunststoff gebildet sein. Bevorzugt besteht das Endstück aus einem Polyethylen, auch wenn der Filterschlauch ganz oder teilweise aus Polyester besteht.

Bevorzugte Ausführungsbeispiele der Erfindung werden nachfolgend anhand der Zeichnung näher erläutert. In dieser zeigen:
- Fig. 1: eine schematische perspektivische Darstellung einer Filtereinrichtung in einem Teilschnitt,
- Fig. 2: einen Schlauchfilter nach einem ersten Ausführungsbeispiel der Erfindung,
- Fig. 3: einen Schlauchfilter nach einem zweiten Ausführungsbeispiel der Erfindung,
- Fig. 4: eine Einzelheit IV aus der Fig. 2, und
- Fig. 5: die Einzelheit der Fig. 4 gemäß einer alternativen Ausgestaltung der Erfindung.

Die erfindungsgemäßen Schlauchfilter 11 dienen zur physikalischen Stofftrennung. Insbesondere dienen die Schlauchfilter 11 dazu, Feststoffe aus einem Luft-Feststoffgemisch abzuscheiden. Solche Schlauchfilter 11 können auf verschiedensten Gebieten eingesetzt werden. Ein typisches Anwendungsbeispiel solcher Schlauchfilter 11 ist die Staubabsaugung und die Abtrennung von Spänen, die in holzverarbeitenden Betrieben anfallen sowie die Abtrennung von Papierpartikeln aus papierverarbeitenden Prozessen in der Papierindustrie.

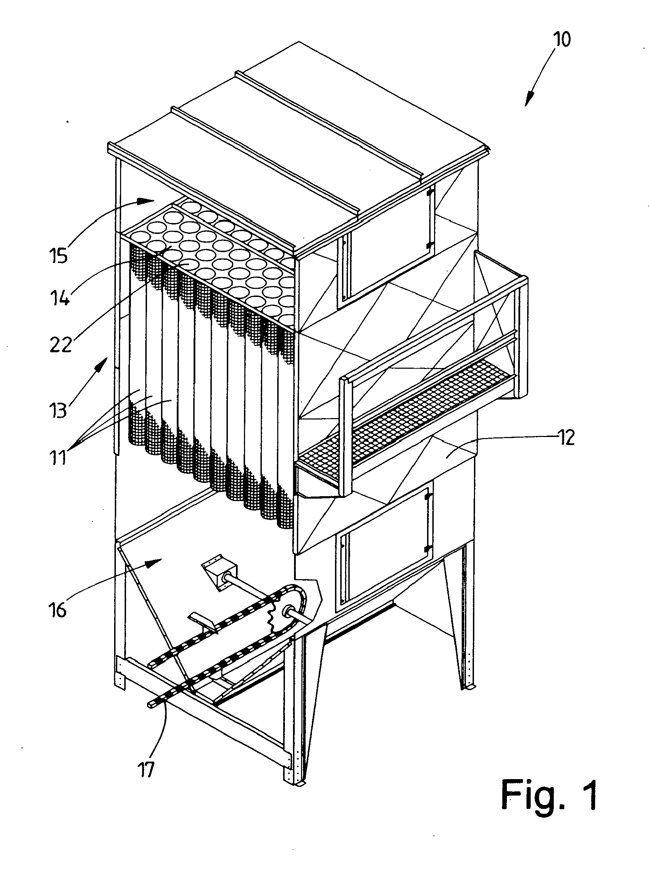

Die Fig. 1 zeigt ein Beispiel einer Filtereinrichtung 10 mit einer Vielzahl erfindungsgemäßer Schlauchfilter 11. Eine solche Filtereinrichtung 10 kann zur Absaugung von in holzverarbeitenden Betrieben anfallenden Spänen eingesetzt werden.

Die hier gezeigte Filtereinrichtung 10 verfügt über ein kastenartiges, geschlossenes Gehäuse 12. In einem mittleren Filterbereich 13 des Gehäuses 12 sind mehrere, vorzugsweise gleiche, Schlauchfilter 11 in einem gleichmäßigen Raster hinter- und nebeneinander angeordnet. Die Schlauchfilter 11 sind an ihren oberen Enden an einer horizontalen, gelochten Tragplatte 14 aufgehängt. Die Tragplatte 14 ist nach Art eines Doppelbodens fest mit den aufrechten Wandungen des Gehäuses 12 verbunden. Oberhalb des Filterbereichs 13 und der diesen nach oben begrenzenden Tragplatte 14 befindet sich eine Luftabsaugkammer 15. Aus der Luftabsaugkammer 15 wird die gereinigte Luft aus dem Gehäuse 12 der Filtereinrichtung 10 abgesaugt. Unterhalb des durch die Schlauchfilter 11 gebildeten Filterbereichs 13 befindet sich ein Sammelraum 16 für die aus dem Luftstrom abgefilterten Feststoffe. Bei der gezeigten Filtereinrichtung 10 ist der Boden des Sammelraums 16 rinnenartig, nämlich mit einem V-förmigen Querschnitt, versehen, sodass sich die abgefilterten Feststoffe unten im rinnenartigen Sammelraum 16 ablagern. Bei der Filtereinrichtung 10 der Fig. 1 ist dem unteren Bereich des Sammelraums 16 ein Endlosförderer 17 zum Abtransport der ausgefilterten Feststoffe zugeordnet. Der Abtransport der Feststoffe kann auch auf andere Weise geschehen. Beispielsweise können dem Sammelraum 16 auswechselbare Behälter zur Aufnahme der aus dem Luft-Feststoffgemisch ausgefilterten Feststoffe zugeordnet sein.

Bei der gezeigten Filtereinrichtung 10 wird in der Luftabsaugkammer 15 durch geeignete Ventilatoren oder dergleichen ein Unterdruck erzeugt, der sich durch die oben offenen Enden der Schlauchfilter 11 in das Innere derselben fortsetzt. Durch die luftdurchlässige Mantelfläche der Schlauchfilter 11 wird das Luft-Feststoffgemisch an der Außenseite der Schlauchfilter 11 angesaugt. Dabei bleiben die abzuscheidenden Feststoffe an der äußeren Mantelfläche der Schlauchfilter 11 zurück, während gefilterte Luft durch das Innere der Schlauchfilter 11 über die offenen oberen Stirnseiten derselben und die Löcher in der Tragplatte 14 durch die Luftabsaugkammer 15 abgesaugt werden kann. Die an der Außenseite der Schlauchfilter 11 zurückbleibenden Feststoffe fallen von der Mantelfläche der Schlauchfilter 11 ab, um in den Sammelraum 16 zu gelangen.

Die Filtereinrichtung 10 kann eine Abschlag- und/oder Abblaseinrichtung aufweisen, mit der von Zeit zu Zeit an der Außenseite der Schlauchfilter 11 anhaftende ausgefilterte Feststoffe mindestens größtenteils entfernt werden können.

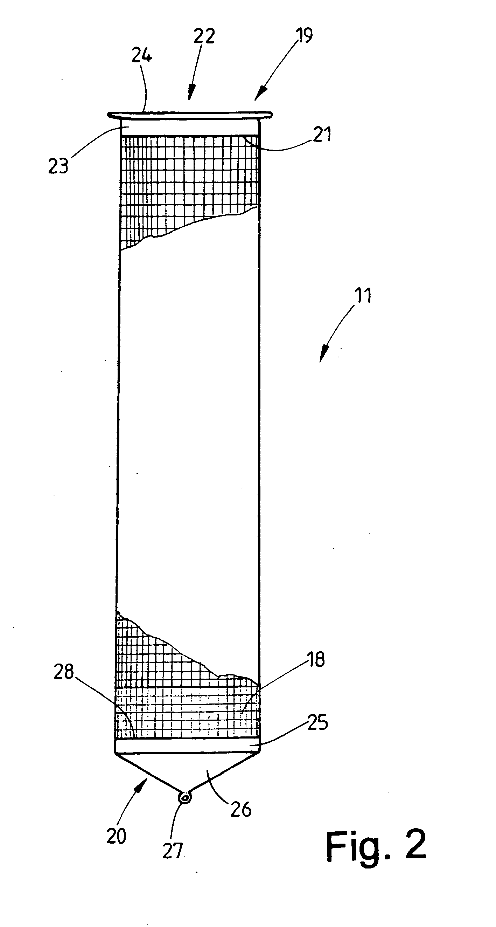

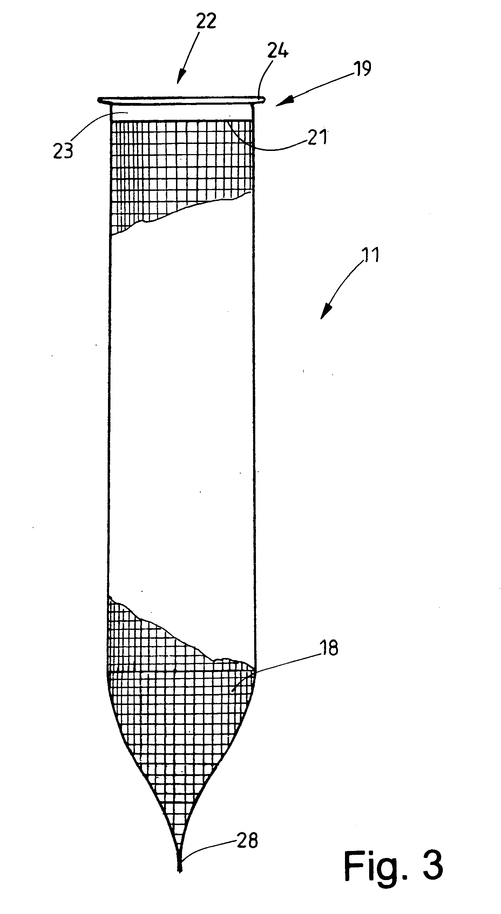

Die Fig. 2 und 3 zeigen verschiedene Ausführungsbeispiele eines Schlauchfilters 11.

Der Schlauchfilter 11 der Fig. 2 verfügt über einen zylindrischen Filterschlauch 18, ein Endstück 19 am oberen Ende und ein Endstück 20 am unteren Ende. Das obere Endstück 19 ist beim Schlauchfilter 11 als ein ringförmiger Kragen mit einem L-förmigen Querschnitt ausgebildet. Dadurch wird das obere Ende 21 des Schlauchfilters 11 vom Endstück 19 offen gehalten, sodass das obere Ende 21 des Schlauchfilters 11 eine größtenteils vollflächige Öffnung 22 zum Luftdurchtritt aufweist. Durch den L-förmigen Querschnitt des oberen Endstücks 19 weist dieses einen gegenüber einen zylindrischen Ring 23 nach außen vorstehenden Kreisring 24 auf. Dieser in einer horizontalen Ebene am oberen Ende des Rings 23 sich befindende Kreisring 24 dient zur Aufhängung des Schlauchfilters 11 auf der Tragplatte 14 der Filtereinrichtung 10, indem sich die äußere vorstehende Wand des Kreisrings 24 auf der Tragplatte 14 abstützt und der zylindrische Ring 23 des Endstücks 19 durch jeweils ein Loch in der Tragplatte gesteckt ist. Das untere Endstück 20 des Schlauchfilters 11 ist als eine geschlossene Kappe ausgebildet, die einen zylindrischen Ring 25 und eine kegelförmige Bodenwandung 26 aufweist. Die Bodenwandung 26 kann auch eine andere Gestalt aufweisen, beispielsweise flach sein. Im gezeigten Ausführungsbeispiel ist an einer unteren Spitze der kegelförmigen Bodenwandung 26 eine Öse 27 vorgesehen, womit das untere Ende des Schlauchfilters 11 mit der Abschlageinrichtung verbunden sein kann. Das kappenartige Endstück 20 verschließt ein unteres Ende 28 des Schlauchfilters 11, um zu verhindern, dass durch das untere Ende 28 ungefilterte Luft in das Innere des Schlauchfilters 11 gelangen kann.

Der Schlauchfilter 11 der Fig. 3 unterscheidet sich vom Schlauchfilter 11 der Fig. 2 nur dadurch, dass er nur den Filterschlauch 18 und das obere Endstück 19 aufweist. Bei diesem Schlauchfilter 11 fehlt somit das untere Endstück 20. Verschlossen wird das untere Ende 28 des Filterschlauchs 18 beim in der Fig. 3 gezeigten Schlauchfilter 11 durch ein Zunähen oder ein sonstiges Verschließen des unteren Endes 28 des Filterschlauchs 18.

Der Filterschlauch 18 ist gebildet aus einem Abschnitt eines längeren schlauchartigen Filtermaterials. Der Filterschlauch 18 kann aber auch gebildet sein aus einem rechteckigen ebenflächigen Zuschnitt, dessen Längsränder zusammengenäht sind zum Filterschlauch 18. Der Filterschlauch 18 ist aus einem im Wesentlichen nur luftdurchlässigen Material gebildet. Hierbei kann es sich um ein Gewebe oder um ein Vlies handeln. Der Filterschlauch 18 ist zumindest teilweise, vorzugsweise vollständig, aus einem thermoplastischen Kunststoff gebildet. Hierbei kann es sich um Polyester, Polyethylen oder auch andere thermoplastische Kunststoffe handeln.

Die Endstücke 19 und 20 sind einteilig aus ebenfalls einem thermoplastischen Kunststoff hergestellt. Bei diesem Kunststoff kann es sich beispielsweise um Polyethylen oder auch einen anderen thermoplastischen Kunststoff handeln.

Beim Filterschlauch der Fig. 3 sind beide Endstücke 19 und 20 einstückig an die gegenüberliegenden Enden des Filterschlauchs 18 angeformt, und zwar vorzugsweise angespritzt. Beim Filterschlauch 18 der Fig. 3 mit nur einem oberen Endstück 19 ist dieses einstückig an das obere Ende des Filterschlauchs 18 angeformt, und zwar vorzugsweise auch angespritzt.

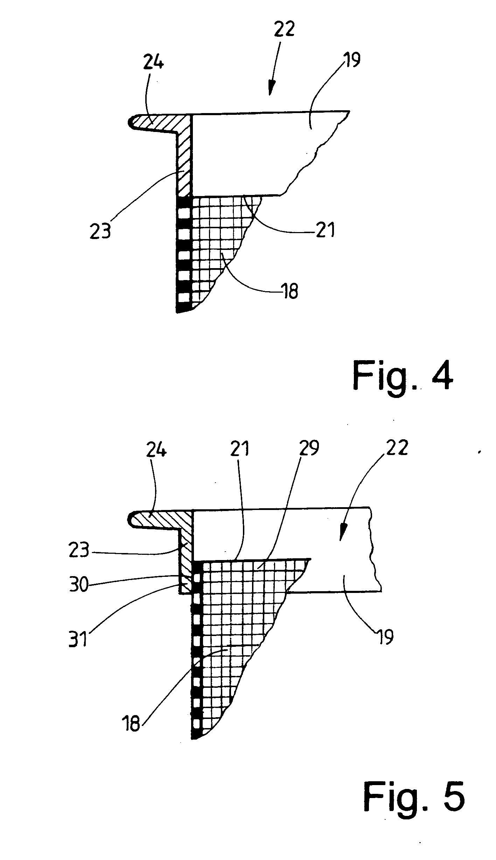

Gemäß der Fig. 4 ist das obere Ende 21 des Filterschlauchs 18 stumpf an das obere, ringförmige Endstück 19 angeformt, insbesondere angespritzt. Weil sowohl das Endstück 19 als auch der Filterschlauch 18 mindestens teilweise aus einem thermoplastischen Kunststoff gebildet sind, führt das Anformen des oberen Endes 21 des Filterschlauchs 18 an das Endstück 19 zu einer innigen Verbindung zwischen dem Filterschlauch 18 und dem Endstück 19, die einer geschweißten Stumpfnaht gleich kommt. Infolge dieser Art der Anformung des Filterschlauchs 18 an das Endstück 19 braucht der zylinderförmige Ring 13 des Endstücks 19 nur recht kurz zu sein. Vorzugsweise ist die Länge des Rings 23 kürzer als die Breite des Kreisrings 24. Beim stumpf an die obere Stirnseite des Filterschlauchs 18 angeformten Endstück 19 ist die Dicke des Filterschlauchs 18 etwa gleich mit der Dicke des Rings 23 des Endstücks 19, an dessen untere ringförmige Stirnwandung das obere Ende 21 des Filterschlauchs 18 angeformt, insbesondere angespritzt, ist. Das untere Endstück 20 beim Schlauchfilter 11 der Fig. 3 kann genauso mit dem unteren Ende 28 des Filterschlauchs 18 verbunden sein wie das obere Endstück 19 mit dem oberen Ende 21.

Beim Ausführungsbeispiel der Fig. 5 ist das obere Endstück 19 an einen oberen Endbereich 29 des Filterschlauchs 18 in einem Überlappungsbereich 30 angeformt, und zwar wiederum vorzugsweise angespritzt. Im gezeigten Ausführungsbeispiel überlappt die Außenseite des oberen Endbereichs 29 des Filterschlauchs 18 die Innenfläche eines unteren Bereichs 31 des Rings 23 des Endstücks 19. Es ist aber auch denkbar, dass der obere Endbereich 29 des Filterschlauchs 18 den unteren Bereich 31 des Rings 23 des Endstücks 19 außen überlappt. Die Länge des Überlappungsbereichs 30 in Längsrichtung des Schlauchfilters 11 ist im gezeigten Ausführungsbeispiel größer als die Dicke des Rings 23 des Endstücks 19 und die Wandstärke des Filterschlauchs 18. Es ist auch denkbar, dass der Überlappungsbereich 30 kürzer ist, nämlich nur der Wandstärke des Rings 23 des Endstücks 19 entspricht. Beim Anformen des oberen Endbereichs 29 des Filterschlauchs 18 mit Überlappung am Endstück 19 kann die Dicke des Filterschlauchs 18 kleiner sein als die Wandstärke des Rings 23 des oberen Endstücks 19. Durch das Anformen, insbesondere Anspritzen, des Filterschlauchs 18 an das Endstück 19 im Überlappungsbereich 30 entsteht dort eine innige und dauerhaft einstückige Verbindung des oberen Endstücks 19 mit dem Filterschlauch 18, die mit einer Schweißnaht vergleichbar ist. So wie das obere Ende des Filterschlauchs 18 mit dem oberen Endstück 19 gemäß der Fig. 5 durch Anformen verbunden ist, kann auch das untere Endstück 20 mit dem unteren Endbereich des Filterschlauchs 18 einstückig verbunden sein durch insbesondere Anspritzen bzw. Zusammenspritzen.

Die Herstellung des Schlauchfilters 11 erfolgt gemäß der Erfindung folgendermaßen:

Zunächst wird der Filterschlauch 18 gebildet. Dazu wird entweder ein entsprechend langer Filterschlauch 18 von einem längeren Vorrat abgelänkt oder es wird aus einem rechteckigen Zuschnitt der Filterschlauch 18 genäht.

Die aus Kunststoff bestehenden Endstücke 19 und/oder 20 werden jeweils für sich im Spritzgussverfahren hergestellt. Beim Spritzen des jeweiligen Endstücks 19 bzw. 20 erfolgt ein Anformen desselben an das jeweilige Ende 21 bzw. 28 oder dem jeweiligen Endbereich 29 des Filterschlauchs 18. Dieses Anformen geschieht erfindungsgemäß derart, dass beim Spritzen des jeweiligen Endstücks 19 bzw. 20 das Ende (21 bzw. 28) oder der Endbereich 29 des Filterschlauchs 18 an das Endstück 19 und 20 angespritzt wird. Dabei kommt während des Spritzens des jeweiligen Endstücks 19, 20 eine einstückige dauerhafte Verbindung des Endstücks 19, 20 mit dem Filterschlauch 18 zustande, indem der Filterschlauch 18 und das mindestens eine Endstück 19, 20 zusammengespritzt werden.

Wenn der Filterschlauch 18 mit einer Stumpfnaht (Fig. 4) mit dem jeweiligen Endstück 19, 20 durch Spritzen verbunden wird, ist das Spritzwerkzeug entsprechend ausgebildet, indem es entweder das obere Ende 21 oder das untere Ende 28 des Filterschlauchs 18 an der Stirnseite des Endstücks 19 oder 20 hält und im Verbindungsbereich mit dem Endstück 19 bzw. 20 das Formnest für das Endstück 19 und 20 entsprechend begrenzt. Wenn hingegen der Filterschlauch 18 mit einer Überlappungsnaht (Fig. 5) mit dem jeweiligen Endstück 19, 20 zusammengespritzt wird, wird ein oberer Endbereich 29 oder auch ein unterer Endbereich des Filterschlauchs 18 so in die Form eingelegt, dass der Überlappungsbereich 30 einen Teil der Innenwandung des Rings 25 des Endstücks 19 oder gegebenenfalls auch des Endstücks 20 bildet (Fig. 5). In diesem Falle stellt im Überlappungsbereich 30 die Außenseite des oberen Endbereichs 29 oder auch des unteren Endbereichs des Filterschlauchs 18 ein Teil des Nests, also der Form, für das Endstück 19 bzw. 20 dar.

Beim Schlauchfilter 11 der Fig. 2 mit einem oberen Endstück 19 und einem unteren Endstück 20 werden entweder mit dem gleichen Werkzeug beide Endstücke 19 und 20 gleichzeitig an die Enden 21 und 28 bzw. Endbereiche 29 des Filterschlauchs 18 angespritzt und dabei in einem Arbeitsgang beide Endstücke 19 und 20 und die einstückige Verbindung derselben mit dem Filterschlauch 18 hergestellt oder es werden in aufeinanderfolgenden, separaten Spritzvorgängen die Endstücke 19 und 20 nacheinander an das jeweilige Ende 21 bzw. 28 oder den jeweiligen Endbereich 29 des Filterschlauchs 18 angespritzt.

Die Erfindung ist nicht auf Schlauchfilter 11 der in der Fig. 1 gezeigten Filtereinrichtung 10 beschränkt. Vielmehr eignet sich die Erfindung für Schlauchfilter 11 beliebiger Filtereinrichtungen. Die Schlauchfilter müssen auch nicht so ausgebildet sein, wie in den Figuren gezeigt. Vor allem brauchen die Filterschläuche keine kreisrunden Querschnitt aufzuweisen, sie können auch über beliebige andere Querschnitte verfügen. Denkbar ist es auch, in erfindungsgemäßer Weise Doppelfilterschläuche aus mehreren koaxial zueinander angeordneten Filterschläuchen unterschiedlicher Durchmesser zu bilden und solche Doppelfilterschläuche nach dem erfindungsgemäßen Verfahren herzustellen.

### Bezugszeichenliste:

- 10: Filtereinrichtung
- 11: Schlauchfilter
- 12: Gehäuse
- 13: Filterbereich
- 14: Tragplatte
- 15: Luftabsaugkammer
- 16: Sammelraum
- 17: Endlosförderer
- 18: Filterschlauch
- 19: Endstück
- 20: Endstück
- 21: oberes Ende
- 22: Öffnung
- 23: Ring
- 24: Kreisring
- 25: Ring
- 26: Bodenwandung
- 27: Öse
- 28: unteres Ende
- 29: oberer Endbereich
- 30: Überlappungsbereich
- 31: unterer Bereich

## Patentansprüche

1. Schlauchfilter mit einem Filterschlauch (18) und mit mindestens einem mit wenigstens einem Ende oder Endbereich des Filterschlauchs (18) verbundenen Endstück (19, 20) aus Kunststoff, **dadurch gekennzeichnet, dass** das jeweilige Endstück (19, 20) an das ihm zugeordnete Ende (21, 28) des Filterschlauchs (18) angeformt ist.

2. Schlauchfilter nach Anspruch 1, **dadurch gekennzeichnet, dass** das jeweilige Endstück (19, 20) einstückig mit dem Filterschlauch (18) verbunden ist.

3. Schlauchfilter nach Anspruch 1 oder 2, **dadurch gekennzeichnet, dass** ein Ende (21, 28) des Filterschlauchs (18) stumpf an ein Ende des Endstücks (19, 20) angeformt ist.

4. Schlauchfilter nach einem der vorhergehenden Ansprüche, **dadurch gekennzeichnet, dass** ein Endbereich (29) des Filterschlauchs (18) mit Überlappung an einen Endbereich des Endstücks (19, 20) angeformt ist.

5. Schlauchfilter nach Anspruch 4, **dadurch gekennzeichnet, dass** der Endbereich (29) des Filterschlauchs (18) den Endbereich des Endstücks (19, 20) innenseitig bereichsweise überlappt.

6. Schlauchfilter nach einem der vorhergehenden Ansprüche, **dadurch gekennzeichnet, dass** die Wandstärke des Filterschlauchs (18) maximal der Wandstärke des ihm zugeordneten Endstücks (19, 20) entspricht, vorzugsweise etwas dünner ist.

7. Schlauchfilter nach einem der vorhergehenden Ansprüche, **dadurch gekennzeichnet, dass** das jeweilige Endstück (19, 20) an den Filterschlauch (18) angespritzt ist, vorzugsweise beim Herstellen des Endstücks (19, 20).

8. Schlauchfilter nach einem der vorhergehenden Ansprüche, **dadurch gekennzeichnet, dass** der Filterschlauch (18) aus einem kunststoffhaltigen Vlies bzw. Gewebe, vorzugsweise einem Kunststoffvlies bzw. einem Kunstgewebe, besteht.

9. Verfahren zur Herstellung eines mindestens einen Filterschlauch (18) und wenigstens ein Endstück (19, 20) aufweisenden Schlauchfilters (11), wobei das jeweilige Endstück (19, 20) mit einem Ende (21, 28) des Filterschlauchs (18) verbunden wird, **dadurch gekennzeichnet, dass** der Filterschlauch (18) beim Herstellen des Endstücks (19, 20) aus Kunststoff an das Endstück (19, 20) angeformt wird.

10. Verfahren nach Anspruch 9, **dadurch gekennzeichnet, dass** beim Herstellen des Endstücks (19, 20) das ihm zugeordnete Ende (21, 28) des Filterschlauchs (18) an das Endstück (19, 20) angespritzt wird.

11. Verfahren nach Anspruch 9 oder 10, **dadurch gekennzeichnet, dass** beim Spritzen des Endstücks (19, 20) das ihm zugeordnete Ende (21, 28) des Filterschlauchs (18) stumpf oder mit Überlappung an das Endstück (19, 20) angeformt, insbesondere angespritzt, wird.

12. Verfahren nach einem der Ansprüche 9 bis 11, **dadurch gekennzeichnet, dass** das Endstück (19, 20) aus einem Kunststoff gespritzt wird, der mit dem Material des Filterschlauchs (18) beim Anspritzen des Endstücks (19, 20) zu einem Filterschlauch (18) eine einstückige Verbindung mit dem Kunststoff des Filterschlauchs (18) eingeht.
